# EUROPEAN PATENT APPLICATION

(11) **EP 1 666 855 A1**
(43) Date of publication of application: **07.06.2006**
(21) Application number: 04787729.5
(22) Date of filing: 08.09.2004
(51) Int. Cl.: G01H 11/06

(54) **VIBRATION SENSOR**

(30) Priority: 22.09.2003 JP 2003329877
(71) Applicant: HOSIDEN CORPORATION, Yao-shi, Osaka 581-0071 (JP)
(72) Inventor: YASUDA, Mamoru, c/o Hosiden Corporation, Yao-shi, Osaka 581-0071 (JP); SUGIMORI, Yasuo, c/o Hosiden Corporation, Yao-shi, Osaka 581-0071 (JP)
(74) Representative: Blumenröhr, Dietrich
(86) International application number: PCT/JP2004/013046
(87) International publication number: WO 2005/029013

(57) **Abstract**

In a vibration sensor for outputting, as vibration signals, variations of capacitance between a fixed electrode and a diaphragm 3 electrode opposed thereto, the diaphragm electrode 3 has slits 3a formed in the same plate member to define a diaphragm portion 3b positioned centrally to be vibrated and displace only by gravity, a fixed portion 3c positioned peripherally, and elastic support portions 3d for connecting the diaphragm portion 3b to the fixed portion 3c.

## Description

### TECHNICAL FIELD

The present invention relates to a vibration sensor of the capacitance type, and particularly to a vibration sensor for outputting, as vibration signals, variations of capacitance between a fixed electrode and a diaphragm electrode opposed the fixed electrode.

### BACKGROUDN ART

In a vibration sensor of the capacitance type used as a vibration sensor for a pedometer, a micro-vibration galvanometer and a precision device, a vibration sensor for an anti-blur function of a camera and the like, a diaphragm electrode conventionally comprises a film of polyethylene terephthalate (PET), polyphenylene sulfide (PPS) or the like, and includes a weight or weights mounted on a central portion of the film to obtain signals of greater amplitude (see Patent Document 1, for example).

Another prior art has proposed a vibration sensor including a vibrating and displacing diaphragm portion having slits formed in a plate member, and a weight attached to the diaphragm portion (see Patent Document 2, for example). The slits of the vibration sensor include an annular slit and radial slits extending outward from the center of the sensor.
Patent Document 1: Patent Application "Kokai" No. 59-79700
Patent Document 2: Patent Application "Kokai" No. 9-49856

### DISCLOSURE OF THE INVENTION

### PROBLEM TO BE SOLVED BY THE INVENTION

However, the vibration sensors disclosed in Patent Document 1 and Patent Document 2 have a construction including the weight(s) mounted on the diaphragm electrode, which requires a space for the weight(s) to be mounted. This makes it difficult for the vibration sensor to have a thin construction. Further, when the vibration sensor is dropped or an excessive shock is applied from outside to the sensor, the provision of the weight(s) causes the diaphragm electrode to be deformed or damaged, which results in drawbacks that output signals cannot be obtained or may be diminished.

The present invention has been made having regard to the above-noted problem, and its object is to provide a vibration sensor of the capacitance type for detecting micro-vibrations, the vibration sensor having a thinner construction and excellent shock resistance.

### MEANS FOR SOLVING THE PROBLEM

In order to achieve the above-noted object, a characteristic feature of the present invention lies in a vibration sensor for outputting, as vibration signals, variations of capacitance between a fixed electrode and a diaphragm electrode opposed thereto, in which the diaphragm electrode has slits formed in the same plate member to define a diaphragm portion positioned centrally to be vibrated and displaced only by gravity, a fixed portion positioned peripherally, and elastic support portions for connecting the diaphragm portion to the fixed portion.

With this construction, the elastic support portions formed by providing the slits in the diaphragm electrode act as a spring to allow the center diaphragm portion to be vibrated and displaced by gravity, whereby a desired amplitude can be obtained without providing any weight. A shock applied from outside is absorbed by the elastic support portions having the spring structure, which can improve shock resistance. Particularly, the slits formed in the diaphragm electrode will function as a shock absorbing material against a shock applied circumferentially of the diaphragm electrode to alleviate the shock. As a result, it is possible to provide the vibration sensor dispensing with a space for providing a weight or weights, which is thinner and has excellent shock resistance.

A further characteristic feature of the vibration sensor according to the present invention lies in that the plate member is made of one of stainless steel, tungsten, Ti-Cu alloy and Be-Cu alloy.

With this construction, since the material having high specific gravity and great bending strength is used, such as stainless steel having a specific gravity of 7.8 (SUS304), tungsten having a specific gravity of 16, or the like, instead of conventionally employed PET or PPS, a desired amplitude is obtained only by dead weight of the diaphragm portion, and shock resistance can be improved. Thus, this characteristic construction can provide a practical mode for using the vibration sensor capable of obtaining sufficient output signals and realizing excellent shock resistance.

A still further characteristic feature of the present invention lies in that the plate member is 30µm to 50µm in thickness.
With this construction, the thickness of the plate member is set to a larger value than the thickness of a conventional diaphragm electrode (approximately 3µm to 4µm, for example), which can improve the bending strength and shock resistance of the plate member. The weight of the diaphragm portion can be set such that sufficient output signals are obtained without providing an additional weight.

A still further characteristic feature of the present invention lies in that the diaphragm portion has a circular shape, and each of the elastic support portions is formed as an arcuate strip member with one end continuous with the diaphragm portion and the other end continuous with the fixed portion, a plurality of elastic support portions being arranged at equal intervals circumferentially of the diaphragm portion.

With this construction, the arcuate strip member constitutes an elastically deformable spring element, which allows the elastic support portions to be formed with a simple construction, and facilitates manufacture of the diaphragm electrode.

Also, the arcuate strip members (spring members) are arranged at equal intervals circumferentially of the diaphragm portion to apply a load uniformly to the elastic support portions, which allows the diaphragm portion to displace in parallel, thereby to obtain stable outputs. Particularly, a three-point support structure with three strip members will enlarge displacement of the diaphragm portion to increase sensor output.

A still further characteristic feature of the present invention lies in that the elastic support portion is formed to have a beam shape for connecting a position of the diaphragm portion at an outer periphery thereof to the fixed portion adjacent said position of the diaphragm portion.

With this construction, the diaphragm portion has a single-point support (cantilever) structure to prevent the fixed electrode from making a face-to-face contact with the diaphragm portion when the diaphragm portion is displaced. Particularly, where an electret member is formed on a surface of the fixed electrode opposed to the diaphragm electrode, the diaphragm portion will easily stick to the electret member owing to charges of the electret member. However, this characteristic construction may effectively prevent the diaphragm portion from sticking to the electret member.

### BEST MODE FOR CARRYING OUT THE INVENTION

Embodiments of the present invention will be described hereinafter with reference to the drawings.
A first embodiment will be described first.
As shown in Figs. 1 and 2, a vibration sensor 1 according to the present invention is a vibration sensor for outputting, as vibration signals, variations of capacitance between a fixed electrode 2 and a diaphragm electrode 3 opposed to the fixed electrode 2. The diaphragm electrode 3 has slits 3a formed in the same plate member to define a diaphragm portion 3b positioned centrally to be vibrated and displaced only by gravity, a fixed portion 3c positioned peripherally, and elastic support portions 3d for connecting the diaphragm portion 3b to the fixed portion 3c. Further, as shown in Fig. 3, an operational amplifier is provided at an output side to act as an amplifier circuit 11. It should be noted that the present invention can be applied to both the front type and back type.

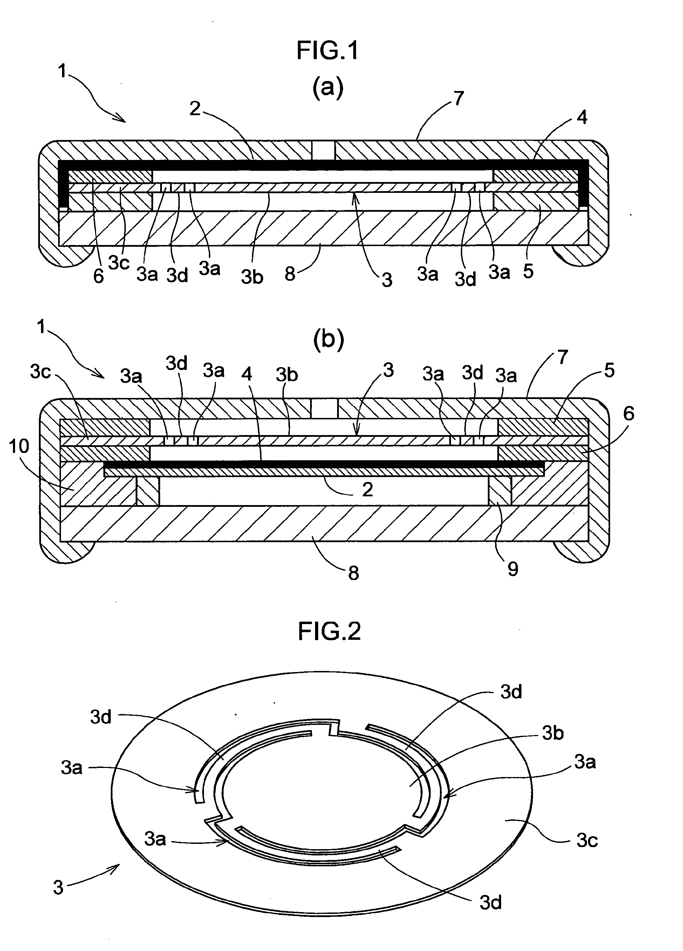

As shown in Fig. 1(a), a front-type vibration sensor 1 has a fixed electrode 2 provided by a bottom portion of a case member 7 having a U-shaped section with an electret member 4 formed on an inner surface thereof. Successively stacked on the bottom portion of the case member 7 are a ring-shaped spacer 6, a diaphragm electrode 3 and a diaphragm electrode ring 5. The case member 7 is covered with and secured to a circuit board 8, thereby completing assembling of the vibration sensor. The fixed electrode 2 is connected to the circuit board 8 through the case member 7, while the diaphragm electrode 3 is connected to the circuit board 8 through the diaphragm electrode ring 5.

As shown in Fig. 1(b), a back-type vibration sensor 1 has a diaphragm electrode ring 5, a diaphragm electrode 3, a spacer 6, a fixed electrode 2 with a electret member 4, a back electrode holder 10 and a gate ring 9 successively stacked on a bottom portion of a case member 7. The case member 7 is then covered with and secured to a circuit board 8, thereby completing assembling of the vibration sensor. In this construction, the fixed electrode 2 is fixedly supported with peripheral portions thereof pinched by the back electrode holder 10 made of an insulating material. The fixed electrode 2 is connected to the circuit board 8 through the gate ring 9. The diaphragm electrode 3 is connected to the circuit board 8 through the diaphragm electrode ring 5 and case member 7.

The thickness of the diaphragm electrode ring 5 is reduced in both the front-type and back-type in order to improve shock resistance, which contributes to thinning of the vibration sensor 1. It should be noted that the amplifier circuit 11 may be or may not be incorporated in the circuit board 8.

The diaphragm electrode 3 is made of SUS304 (stainless steel), for example, and is set to 30µm to 50µm in thickness. Further, the diaphragm electrode 3 has the slits formed in the same plate member to define the diaphragm portion 3b, fixed portion 3c and elastic support portions 3d, and thus can easily be manufactured by press working, etching and so on.

The diaphragm portion 3b has a circular shape, and its area is determined so as to have a weight for detecting vibrations effectively and obtaining a desired amplitude. Each of the elastic support portions 3d is formed as an arcuate strip member with one end continuous with the diaphragm portion 3b and the other end continuous with the fixed portion 3c. The plural elastic support portions 3d are arranged at equal intervals circumferentially of the diaphragm portion 3b. In this embodiment, three elastic support portions 3d of the same shape are arranged at equal intervals circumferentially of the diaphragm portion 3b to assume a three-point support structure, which increases displacement of the diaphragm portion 3b to increase sensor output. The number of elastic support portions 3d may be selected as desired, though the present embodiment provides three elastic support portions 3d by taking stability of the vibration sensor 1 and so on into consideration.

The vibration sensor 1 of this embodiment has undergone tests in which the sensor was dropped as fixed to a box from a height of 1.5meters once in each of the six directions, which has confirmed that no damage is done to the vibration sensor 1, or the diaphragm electrode 3 in particular. Also, a proper thickness of the diaphragm electrode 3 having a diameter of approximately φ4 is 30µm, while a proper thickness of the diaphragm electrode 3 having a diameter of approximately φ6 is 50µm. Although the thickness of the diaphragm electrode 3 having a diameter of approximately φ4 may be set to 50µm, output signals will be diminished.

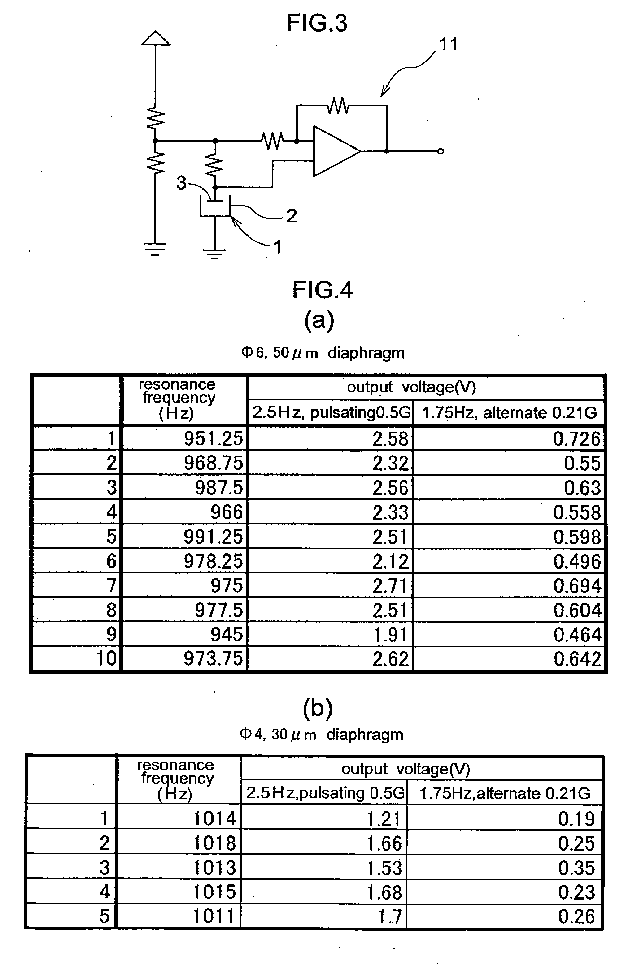

Fig. 4 shows output voltages under the conditions of resonance frequency (Hz) and low frequency vibrations (2.5Hz and 1.75Hz) with respect to vibration sensors 1 having the two types of diaphragm electrodes 3, one of which is 30µm in thickness and approximately φ4 in diameter, the other is 50µm in thickness and approximately φ6 in diameter. Here, the stage gain of the amplifier circuit 11 is set to 16, while the source voltage is set to 3V.

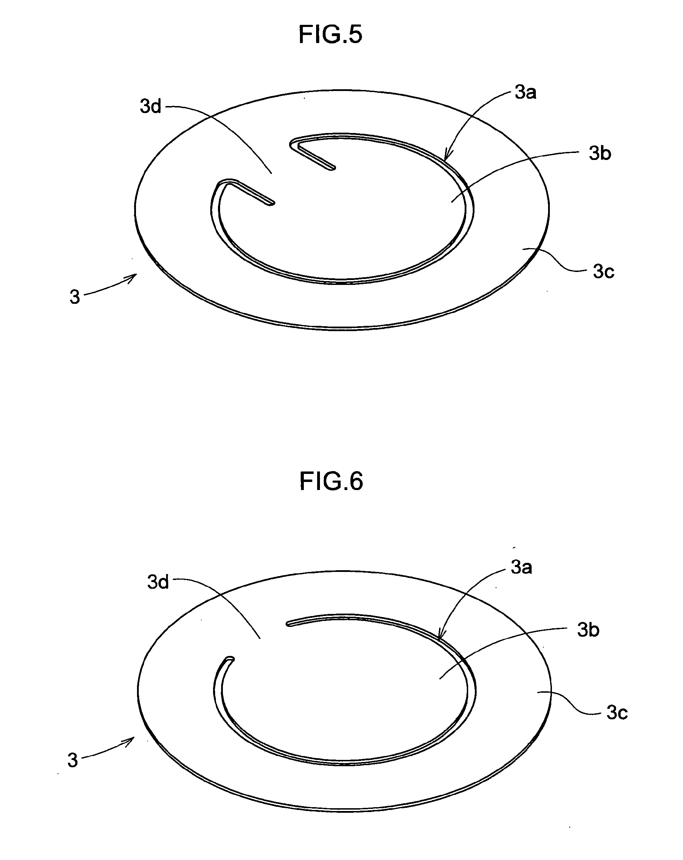

Next, a second embodiment of the present invention will be described based on Fig. 5.
In this embodiment, the diaphragm portion 3b has a circular shape, and a beam-shaped elastic support portion 3d is formed for connecting a position at an outer periphery of the diaphragm portion 3b to a fixed portion 3c adjacent that position. More particularly, a partly circular slit 3a is formed to extend inwardly from opposite ends thereof to form straight slits 3a. In this embodiment, the elastic support portion 3d is formed in one location to have a cantilever beam construction, whereby the diaphragm portion 3b does not make a parallel displacement to prevent the diaphragm electrode 3 from sticking to the electret member 4.

A third embodiment of the present invention will be described based on Fig. 6.
In this embodiment, as in the second embodiment, the diaphragm portion 3b has a circular shape, and a beam-shaped elastic support portion 3d is formed for connecting a position at an outer periphery of the diaphragm portion 3b to a fixed portion 3c adjacent that position. In this embodiment, a partly circular slit 3a is formed. As a result, the shape of the slit 3a can be simplified to realize the vibration sensor 1 according to the present invention by providing a simpler construction.

In the first to three embodiments as described above, the plate member is formed of SUS304 (stainless steel). Instead, any material having a high specific gravity and great bending strength may be employed such as tungsten, Ti-Cu alloy, Be-Cu alloy or the like.

### INDUSTRIAL UTILITY

The present invention is useful for a vibration sensor for a pedometer, a micro-vibration galvanometer or a precision device, a vibration sensor for an anti-blur function of a camera, and so on.

### BRIEF DESCRIPTION OF THE DRAWINGS

[Fig. 1] Sectional views showing an embodiment of a vibration sensor according to the present invention.
[Fig. 2] Schematic view showing an example of diaphragm electrode of the vibration sensor according to the present invention.
[Fig. 3] Wiring diagram showing the vibration sensor and a peripheral circuit thereof.
[Fig. 4] Tables showing examples of resonance frequency and output voltage of the vibration sensor according to the present invention.
[Fig. 5] Schematic view showing a modified example of diaphragm electrode of the vibration sensor according to the present invention.
[Fig. 6] Schematic view showing another modified example of diaphragm electrode of the vibration sensor according to the present invention.

### DESCRIPTION OF REFERENCE NUMERALS

- 1: vibration sensor
- 2: fixed electrode
- 3: diaphragm electrode
- 4: electret
- 5: diaphragm electrode ring
- 6: spacer
- 7: case member
- 8: circuit board
- 9: gate ring
- 10: back electrode holder
- 11: amplifier circuit

## Claims

1. A vibration sensor for outputting, as vibration signals, variations of capacitance between a fixed electrode and a diaphragm electrode opposed thereto,
wherein the diaphragm electrode has slits formed in the same plate member to define a diaphragm portion positioned centrally to be vibrated and displaced only by gravity, a fixed portion positioned peripherally, and elastic support portions for connecting the diaphragm portion to the fixed portion.

2. A vibration sensor as defined in Claim 1, wherein the plate member is made of one of stainless steel, tungsten, Ti-Cu alloy and Be-Cu alloy.

3. A vibration sensor as defined in Claim 1, wherein the plate member is 30µm to 50µm in thickness.

4. A vibration sensor as defined in Claim 1, wherein the diaphragm portion has a circular shape, and each of the elastic support portions is formed as an arcuate strip member with one end continuous with the diaphragm portion and the other end continuous with the fixed portion, a plurality of elastic support portions being arranged at equal intervals circumferentially of the diaphragm portion.

5. A vibration sensor as defined in Claim 1, wherein the elastic support portion is formed to have a beam shape for connecting a position of the diaphragm portion at an outer periphery thereof to the fixed portion adjacent said position of the diaphragm portion.

## Amended claims

### Amended claims under Art. 19.1 PCT

1. (amended) A vibration sensor for outputting, as vibration signals, variations of capacitance between a fixed electrode and a diaphragm electrode opposed thereto,
wherein the diaphragm electrode has slits formed in the same plate member to define a diaphragm portion positioned centrally to be vibrated and displaced only by gravity, a fixed portion positioned peripherally, and elastic support portions for connecting the diaphragm portion to the fixed portion, and
wherein the diaphragm portion has a circular shape, and each of the elastic support portions is formed as an arcuate strip member with one end continuous with the diaphragm portion and the other end continuous with the fixed portion, a plurality of elastic support portions being arranged at equal intervals circumferentially of the diaphragm portion.

2. (amended) A vibration sensor for outputting, as vibration signals, variations of capacitance between a fixed electrode and a diaphragm electrode opposed thereto,
wherein the diaphragm electrode has slits formed in the same plate member to define a diaphragm portion positioned centrally to be vibrated and displaced only by gravity, a fixed portion positioned peripherally, and elastic support portions for connecting the diaphragm portion to the fixed portion, and
wherein the elastic support portion is formed to have a beam shape for connecting a position of the diaphragm portion at an outer periphery thereof to the fixed portion adjacent said position of the diaphragm portion.

3. (amended) A vibration sensor as defined in Claim 1 or 2, wherein the plate member is made of one of stainless steel, tungsten, Ti-Cu alloy and Be-Cu alloy.

4. (amended) A vibration sensor as defined in Claim 1 or 2, wherein the plate member is 30µm to 50µm in thickness.

5. (cancelled)
